(19) Europäisches Patentamt
European Patent Office
Office européen des brevets

(11) **EP 3 334 945 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16744728.3**

(22) Anmeldetag: **26.07.2016**

(51) Int Cl.:
**F16B 25/00** *(2006.01)*

(86) Internationale Anmeldenummer:
**PCT/EP2016/067769**

(87) Internationale Veröffentlichungsnummer:
**WO 2017/025318 (16.02.2017 Gazette 2017/07)**

(54) **VERFAHREN ZUM SETZEN EINER SCHRAUBE**

SCREW DRIVING-IN METHOD

PROCEDE DE POSE D'UNE VIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2015 EP 15180753**

(43) Veröffentlichungstag der Anmeldung:
**20.06.2018 Patentblatt 2018/25**

(73) Patentinhaber: **Hilti Aktiengesellschaft**
**9494 Schaan (LI)**

(72) Erfinder:
• **HARTZ, Martin**
**6830 Rankweil (AT)**
• **GOOS, Niels**
**86899 Landsberg (DE)**
• **VELTEN, Simon**
**6710 Nenzing (AT)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**DE-A1- 19 735 280     DE-A1- 19 905 845**

**Beschreibung**

Die Erfindung betrifft ein Verfahren zum Setzen einer Schraube, welche in einem vorderen Bereich ein Aussengewinde und in einem rückwärtigen Bereich einen Antrieb zum Einleiten eines Drehmoments in die Schraube aufweist, in einem Bohrloch in einem Substrat aus einem mineralischen Baustoff, gemäss dem Oberbegriff des Anspruchs 1. Bei einem solchen Verfahren ist vorgesehen, dass

- mittels eines mit einem Schneidgewinde versehenen Gewindebohrers ein Innengewinde im Bohrloch erzeugt wird, und
- anschliessend die Schraube in das Bohrloch eingebracht, insbesondere eingedreht, wird und dabei das Aussengewinde der Schraube in das vom Gewindebohrer erzeugte Innengewinde im Bohrloch eingeschraubt wird.

Die Erfindung betrifft ferner ein Gebinde enthaltend Gegenstände zur Durchführung eines solchen Verfahrens.

Aus der DE 19735280 A1 ist es bekannt, vor dem Einschrauben einer Betonschraube ein Gewinde vorzuschneiden, wodurch eine grössere Freiheit bei der Materialauswahl für die Betonschraube gegeben sein soll.

Die DE 19905845 A1 beschreibt einen Schraub-Befestigungs-Satz für Beton, bei dem eine Schraube und ein nach Art einer Schraube ausgebildeter Gewindebohrer vorgesehen sind, wobei der Kerndurchmesser des Gewindebohrers kleiner ist als der Kerndurchmesser der Schraube, so dass das Spiel am Kern der Schraube kleiner ist als das Spiel am Kern des Gewindebohrers. Hierdurch soll erreicht werden, dass einerseits mit dem Gewindebohrer das beim Gewindeschneiden auftretende Schneidmehl nach aussen abtransportiert werden kann, und dass andererseits die Schraube mit festem Sitz in dem vorgeschnittenen Gewinde untergebracht wird. Vorzugsweise soll der Aussendurchmesser der Schraube im Bereich des zylindrischen Gewindes kleiner als der Aussendurchmesser des Gewindebohrers sein, wodurch erreicht werden soll, dass beim Einschrauben der Schraube in den Gewindegang keine Klemmungen am Aussenumfang des Gewindes der Schraube auftreten.

Aus der EP 0625400A1 geht ein Werkzeug zum Erzeugen eines Innengewindes in Beton, Mauerwerk oder dergleichen hervor.

Die US 4439077 A beschreibt eine Betonschraube, die so ausgelegt ist, dass beim Eindrehen Bohrmehl verdichtet wird. Eine weitere Betonschraube ist aus der US 4842467A bekannt.

Die US 8696477 A, US 8182185 A, US 7740435 A, US 8182186 A und US 7484920 A offenbaren Betonschrauben, welche im Gewindeverlauf Schneidkörper aufweisen, die eine gegenüber dem restlichen Gewinde erhöhte Härte aufweisen. Dies ermöglicht es, für die verbleibenden Schraubenbereiche ein Material mit einer vergleichsweise hohen Korrosionsbeständigkeit einzusetzen, selbst wenn dieses eine vergleichsweise geringe Härte haben sollte.

Aufgabe der Erfindung ist es, ein Verfahren zum Setzen einer Schraube in einem Bohrloch in einem Substrat aus einem mineralischen Baustoff, insbesondere Beton, anzugeben, mit dem bei geringem Aufwand ein besonders zuverlässiges Setzen der Schraube möglich ist, und mit dem besonders guten Lastwerten und eine besonders gute Korrosionsbeständigkeit erzielt werden können, sowie ein Gebinde enthaltend Gegenstände zur Durchführung eines solchen Verfahrens anzugeben.

Die Aufgabe wird erfindungsgemäss durch ein Verfahren mit den Merkmalen des Anspruchs 1 und ein Gebinde mit den Merkmalen des Anspruchs 8 gelöst. Bevorzugte Ausführungsformen sind in den abhängigen Ansprüchen angegeben.

Ein erfindungsgemässes Verfahren ist dadurch gekennzeichnet, dass der Aussendurchmesser des Schneidgewindes des Gewindebohrers kleiner ist als der Aussendurchmesser des Aussengewindes der Schraube.

Ein Grundgedanke der Erfindung kann darin gesehen werden, mittels des Gewindebohrers ein Innengewinde im Bohrloch vorzuschneiden, in welches das Aussengewinde der Schraube anschliessend eingeschraubt wird, wobei das Schneidgewinde des Gewindebohrers so dimensioniert ist, dass das vorgeschnittene Innengewinde gegenüber dem Aussengewinde der Schraube ein Mindermass aufweist.

Im Rahmen der Erfindung wurde beobachtet, dass es beim Setzen von Schrauben in mineralischen Werkstoffen, insbesondere auch in hoch- oder höchstfestem Beton und vor allem bei Armierungstreffern, zu einem unerwünschten Blocken der Schraube kommen kann. Dies wurde insbesondere auch bei Schrauben mit Schneidkörpern im Gewindeverlauf beobachtet, und kann auf eine unerwünschte Wechselwirkung der Oberflächen der Schneidkörper und/oder der Oberflächen der für die Schneidkörper vorgesehenen Gewindeaussparungen mit dem Substrat zurückzuführen sein. Darüber hinaus wurde in Rahmen der Erfindung beobachtet, dass es bei Armierungstreffern zu einem hohen Verschleiss oder im Extremfall gar zu einer vollständigen Zerstörung der Gewindewendel kommen kann, was zu Performanceverlusten oder im Extremfall zu einem Durchdrehen führen kann, wobei der Befestigungspunkt unbrauchbar werden kann. Hier setzt die Erfindung an und sieht gemäss einem ersten Erfindungsgrundgedanken vor, im Betonsubstrat mittels eines Gewindebohrers ein Vorgewinde, nämlich das Aussengewinde, vorzuschneiden. Hierdurch kann dem oben genannten Blocken und dem oben genannten unerwünschten erhöhten Verschleiss, insbesondere bei Armierungstreffern, einfach entgegengewirkt werden, so dass eine besonders hohe Zuverlässigkeit gegeben ist. Entsprechend einem zweiten Erfindungsgrundgedanken weist das Vorgewinde dabei ein Mindermass gegenüber dem Aussengewinde der Schraube auf, das heisst das mit dem Gewindebohrer erzeugte Gewinde ist in seinem Aussendurchmesser kleiner als der Schraubenaussendurchmesser. Aufgrund dieses Mindermasses schneidet die Gewindespitze des Aussengewindes der Schraube beim Einschrauben der Schraube in das Substrat ein, so dass beim Einschrauben der Schraube gezielt lose Substratpartikel erzeugt werden. Diese Substratpartikel wiederum können für eine vorteilhafte Verpressung der Schraube mit der umgebenden Bohrlochwand sorgen, was das Bohrloch stabilisiert und daher für besonders gute Lastwerte sorgen kann. Erfindungsgemäss können somit bei besonders hoher Zuverlässigkeit besonders hohe Lastwerte erhalten werden.

Unter dem Aussendurchmesser eines Gewindes kann in üblicher Weise insbesondere der Durchmesser eines das Gewinde einhüllenden Zylinders verstanden werden. Das Schneidgewinde des Gewindebohrers und/oder das Aussengewinde der Schraube sind vorzugsweise Zylindergewinde. Bevorzugt ist der Aussendurchmesser des Schneidgewindes des Gewindebohrers über zumindest 50%, vorzugsweise über zumindest 75% oder 80%, der Gewindelänge des Schneidgewindes des Gewindebohrers konstant. Alternativ oder zusätzlich ist bevorzugt der Aussendurchmesser des Aussengewindes der Schraube über zumindest 50%, vorzugsweise über zumindest 75% oder 80%, der Gewindelänge des Aussengewindes der Schraube konstant.

Das Substrat aus einem mineralischen Baustoff kann insbesondere ein Betonsubstrat sein. Der Gewindebohrer weist vorzugsweise einen Schaft auf, an dem das Schneidgewinde angeordnet ist. Auch die Schraube weist vorzugsweise einen Schaft auf, an dem das Aussengewinde angeordnet ist. Zeitlich zwischen dem Erzeugen des Innengewindes im Bohrloch und dem anschliessenden Einschrauben der Schraube können ein oder mehrere Zwischenschritte, wie Reinigungsschritte, vorgesehen werden. Vorzugsweise lassen diese Zwischenschritte die Struktur des Substrats, insbesondere die Struktur des vom Gewindebohrer erzeugten Innengewindes, zumindest annähernd unverändert. Der Gewindebohrer kann das Substrat zum Erzeugen des Aussengewindes vorzugsweise spanend bearbeiten.

Das Schneidgewinde des Gewindebohrers und das Aussengewinde der Schraube sind insbesondere gleichsinnig.

Besonders bevorzugt ist es, dass der Aussendurchmesser des Schneidgewindes des Gewindebohrers das 0.85-fache bis 0.92-fache des Aussendurchmessers des Aussengewindes der Schraube beträgt. Experimente haben gezeigt, dass in diesem Bereich einerseits eine besonders gute Tragfähigkeit gegeben ist, da Substratpartikel, welche zum Verpressen im Bohrloch benötigt werden, in ausreichendem Maße zur Verfügung stehen, und dass andererseits ein besonders gutes Setzverhalten gegeben ist. Insbesondere lässt sich die Schraube zwar relativ leicht setzen, sie fällt aber nicht einfach in das Bohrloch hinein, das heisst es ist ein solides Setzgefühl gegeben.

Eine weitere vorteilhafte Ausgestaltung liegt darin, dass die Gewindesteigung des Schneidgewindes des Gewindebohrers um weniger als 3%, vorzugsweise weniger als 1%, von der Gewindesteigung des Aussengewindes der Schraube abweicht. Hierdurch kann die Zuverlässigkeit und Leistungsfähigkeit noch weiter verbessert werden.

Weiterhin ist es bevorzugt, dass der Kerndurchmesser des Schneidgewindes des Gewindebohrers um weniger als 3%, vorzugsweise weniger als 1%, vom Kerndurchmesser des Aussengewindes der Schraube abweicht. Hierdurch kann die Zuverlässigkeit noch weiter gesteigert werden und insbesondere einer unerwünschten Beschädigung des Bohrlochs entgegengewirkt werden.

Insbesondere kann vorgesehen sein, dass die Gewindelänge des Schneidgewindes des Gewindebohrers um weniger als 3%, vorzugsweise weniger als 1%, von der Gewindelänge des Aussengewindes der Schraube abweicht. Auch hierdurch kann die Zuverlässigkeit noch weiter gesteigert werden, da hiermit in besonders einfacher Weise gewährleistet werden kann, dass das Vorgewinde die korrekte Tiefe hat.

Zweckmässigerweise wird beim Einschrauben der Schraube zugleich ein Anbauteil am Substrat festgelegt, vorzugsweise indem die Schraube durch eine Ausnehmung im Anbauteil hindurch in das Bohrloch eingebracht wird. Somit wird also beim erstmaligen Einschrauben der Schraube zugleich das Anbauteil festgelegt. Hierdurch kann die Zuverlässigkeit noch weiter gesteigert werden, da in besonders einfacher Weise gewährleistet werden kann, dass beim Aufweiten des Vorgewindes anfallende Substratpartikel auch tatsächlich zur Verpressung und somit zur Tragfähigkeitserhöhung der Schraube beitragen. Vorzugsweise kann das Anbauteil formschlüssig am Substrat festgelegt werden, beispielsweise durch einen im rückwärtigen Bereich der Schraube vorgesehenen Schraubenkopf.

Der Antrieb kann beispielsweise ein Schraubenkopf sein, das heisst insbesondere ein lokal querschnittsvergrösserter Bereich der Schraube. Der Schraubenkopf kann einen Aussenmehrkant oder einen Innenmehrkant aufweisen. Der Antrieb kann aber auch ein einfacher Innenmehrkant sein.

Es kann ein Gebinde enthaltend eine Schraube und/oder einen Gewindebohrer, und enthaltend ferner eine Gebrauchsanweisung, welche ein erfindungsgemässes Verfahren unter Verwendung der Schraube beziehungsweise des Gewindebohrers lehrt, vorgesehen sein. Das Gebinde enthält somit eine Gebrauchsanweisung, welche die erfindungsgemässen Verfahrensschritte lehrt, sowie zumindest einen der für die Durchführung des Verfahrens erforderlichen Gegenstände. Insbesondere kann die Lehre zur Durchführung des erfindungsgemässen Verfahrens in der Gebrauchsanweisung niedergeschrieben sein. Unter einem Gebinde kann in fachüblicher Weise insbesondere die Gesamtheit aus Verpackung und der verpackten Ware verstanden werden.

Die Erfindung betrifft auch ein Gebinde enthaltend die zur Durchführung des Verfahrens wesentlichen Gegenstände, das heisst enthaltend eine Schraube zum Einschrauben in ein Bohrloch in einem Substrat aus einem mineralischen Baustoff, wobei die Schraube in einem vorderen Bereich ein Aussengewinde und in einem rückwärtigen Bereich einen Antrieb zum Einleiten eines Drehmoments in die Schraube aufweist, und einen mit einem Schneidgewinde versehenen Gewindebohrer, wobei der Aussendurchmesser des Schneidgewindes des Gewindebohrers kleiner ist als der Aussendurchmesser des Aussengewindes der Schraube.

Im Zusammenhang mit dem erfindungsgemässen Verfahren genannte Merkmale können auch bei den Gebinden zum Einsatz kommen, so wie umgekehrt im Zusammenhang mit den Gebinden genannte Merkmale auch beim erfindungsgemässen Verfahren zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figuren 1 bis 4:     schematische Darstellungen aufeinanderfolgender Stadien bei der Durchführung des erfindungsgemässen Verfahrens;

Figur 5:     eine Detailansicht des Gewindebohrers, welcher beim Verfahren gemäss Figuren 1 bis 4 zum Einsatz kommt, mit Blickrichtung von der Seite;

Figur 6:     eine Detailansicht der Schraube, welche beim Verfahren gemäss Figuren 1 bis 4 zum Einsatz kommt, mit Blickrichtung von der Seite; und

Figur 7:     eine schematische Ansicht eines erfindungsgemässen Gebindes.

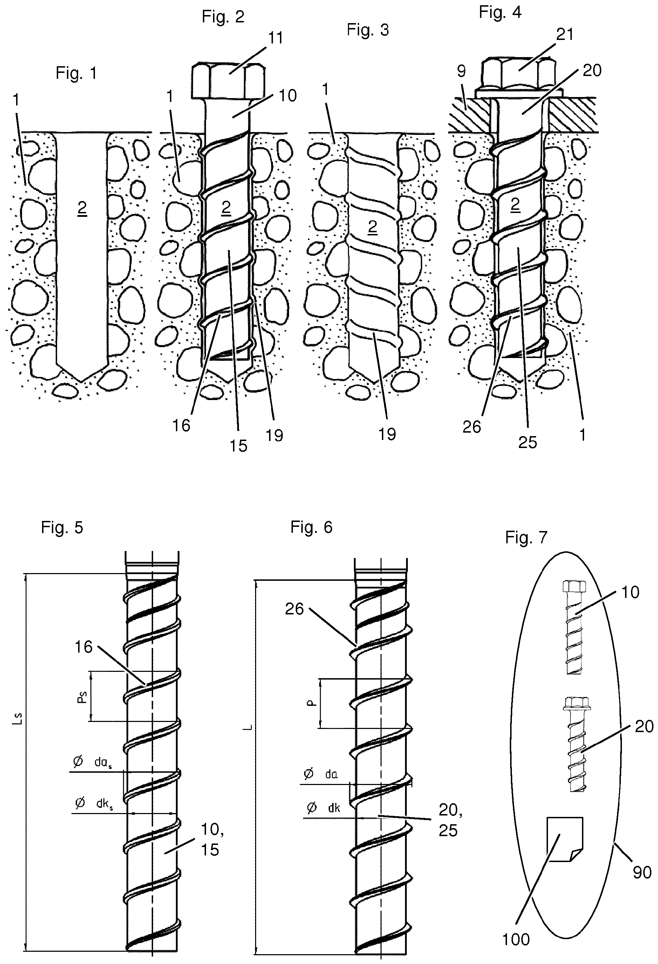

Die Figuren 1 bis 4 zeigen unterschiedliche Stadien bei der Durchführung eines erfindungsgemässen Verfahrens.

Zunächst wird beim Verfahren, wie in Figur 1 gezeigt, in einem Substrat 1 aus einem mineralischen Baustoff, insbesondere aus Beton, ein vorzugsweise zumindest annähernd zylindrisches Bohrloch 2 bereitgestellt.

Sodann wird, wie in Figur 2 gezeigt, ein Gewindebohrer 10 in das Bohrloch 2 eingebracht. Der Gewindebohrer 10 weist einen vorzugsweise zumindest annähernd zylindrischen Schaft 15 sowie ein spiralförmiges Schneidgewinde 16 auf, welches auf dem Schaft 15 angeordnet ist. In einem rückwärtigen Bereich weist der Gewindebohrer 10 einen beispielhaft als Kopf, insbesondere Sechskantkopf, dargestellten Antrieb 11 zum Einleiten eines Drehmoments in den Schaft 15 auf. Das Schneidgewinde 16 weist einen Aussendurchmesser $\emptyset da_s$ (vergleiche Figur 5) auf, der grösser ist als der Innendurchmesser des Bohrlochs 2. Daher schneidet sich das Schneidgewinde 16 beim Einschrauben des Gewindebohrers 10 in das Bohrloch 2 in das das Bohrloch 2 umgebende Substrat 1 ein und erzeugt ein Innengewinde 19 im Bohrloch 2. Für ein besonders leichtes Einschrauben des Gewindebohrers 10 in das Bohrloch 2 kann der Kerndurchmesser $\emptyset dk_s$ des Schneidgewindes 16 des Gewindebohrers 10 (vergleiche Figur 5) vorzugsweise kleiner sein als der Innendurchmesser des Bohrlochs 2.

Im nächsten Schritt wird, wie in Figur 3 gezeigt, der Gewindebohrer 10 durch gegensinnige Drehung wieder aus dem Bohrloch herausgeschraubt. Dabei bleibt das Innengewinde 19 im Bohrloch 2 zurück.

Sodann wird, wie in Figur 4 gezeigt, ein Anbauteil 9 vor dem Bohrloch 2 angeordnet und eine Schraube 20 durch eine Ausnehmung im Anbauteil 9 hindurch in das Bohrloch 2 eingebracht. Die Schraube 20 weist einen vorzugsweise zumindest annähernd zylindrischen Schaft 25 sowie ein spiralförmiges Aussengewinde 26 auf, welches auf dem Schaft 25 angeordnet ist. In einem rückwärtigen Bereich weist die Schraube 20 einen als Kopf, insbesondere Sechskantkopf, dargestellten Antrieb 21 zum Einleiten eines Drehmoments in den Schaft 25 und zum formschlüssigen Halten des Anbauteils 9 auf.

Das Aussengewinde 26 der Schraube 20 weist einen Aussendurchmesser $\emptyset da$ (vergleiche Figur 6) auf, der grösser ist als der Aussendurchmesser $\emptyset da_s$ des Schneidgewindes 16, und der somit grösser ist als der Aussendurchmesser des vom Schneidgewinde 16 erzeugten Innengewindes 19 im Bohrloch 2. Infolgedessen wird das Innengewinde 19 beim Einschrauben der Schraube 20 ein Stück weit radial aufgeweitet. Hierbei fallen im Bohrloch 2 lose Substratpartikel an, welche für eine Verpressung des Schafts 25 der Schraube und somit eine radiale Abstützung des Bohrlochs 2 sorgen können, wodurch besonders gute Lastwerte für die Schraube 20 erhalten werden können. Für ein besonders leichtes Einschrauben der Schraube 20 in das Bohrloch 2 kann der Kerndurchmesser $\emptyset dk$ des Aussengewindes 26 der Schraube 20 (vergleiche Figur 6) vorzugsweise kleiner sein als der Innendurchmesser des Bohrlochs 2.

Wie insbesondere in den Figuren 5 und 6 gezeigt ist, gelten für das Schneidgewinde 16 des Gewindebohrers 10 und das Aussengewinde 26 der Schraube 20 die nachfolgenden Zusammenhänge, wobei das Subskript "S" nachfolgend jeweils den Parameter des Gewindebohrers 10 angibt:

Für den Aussendurchmesser $\emptyset da_s$ des Schneidgewindes 16 des Gewindebohrers 10 beziehungsweise den Aussendurchmesser $\emptyset da$ des Aussengewindes 26 der Schraube 20:

$$\emptyset da_s < \emptyset da,$$

vorzugsweise

$$\emptyset da_s < 0.92 \times \emptyset da \text{ und/oder } \emptyset da_s > 0.85 \times \emptyset da$$

Für die Gewindelänge $L_s$ des Schneidgewindes 16 des Gewindebohrers 10 beziehungsweise die Gewindelänge L des Aussengewindes 26 der Schraube 20 bevorzugt:

$$L_s = L \pm 3 \text{ \%, vorzugsweise } L_s = L \pm 1 \text{ \% .}$$

Für die Gewindesteigung $P_S$ des Schneidgewindes 16 des Gewindebohrers 10 beziehungsweise die Gewindesteigung P des Aussengewindes 26 der Schraube 20 bevorzugt:

$$P_S = P \pm 3 \text{ \%, vorzugsweise } P_S = P \pm 1 \text{ \% .}$$

Für den Kerndurchmesser $\emptyset dk_s$ des Schneidgewindes 16 des Gewindebohrers 10 beziehungsweise den Kerndurchmesser $\emptyset dk$ des Aussengewindes 26 der Schraube 20 bevorzugt:

$$\emptyset dk_s = \emptyset dk \pm 3 \text{ \%, vorzugsweise } \emptyset dk_s = \emptyset dk \pm 1 \text{ \% .}$$

Figur 7 zeigt eine schematische Ansicht eines erfindungsgemässen Gebindes 90, welches eine Schraube 20, einen Gewindebohrer 10 und eine Gebrauchsanweisung 100 enthält, wobei in der Gebrauchsanweisung 100 ein erfindungsgemässes Verfahren beschrieben ist.

**Patentansprüche**

1.　Verfahren zum Setzen einer Schraube (20), welche in einem vorderen Bereich ein Aussengewinde (26) und in einem rückwärtigen Bereich einen Antrieb (21) zum Einleiten eines Drehmoments in die Schraube (20) aufweist, in einem Bohrloch (2) in einem Substrat (1) aus einem mineralischen Baustoff, bei dem

　　- mittels eines mit einem Schneidgewinde (16) versehenen Gewindebohrers (10) ein Innengewinde (19) im Bohrloch (2) erzeugt wird, und
　　- anschliessend die Schraube (20) in das Bohrloch (2) eingebracht wird und dabei das Aussengewinde (26) der Schraube (20) in das vom Gewindebohrer (10) erzeugte Innengewinde (19) im Bohrloch (2) eingeschraubt wird,

　　**dadurch gekennzeichnet,**
　　**dass** der Aussendurchmesser ($\emptyset da_s$) des Schneidgewindes (16) des Gewindebohrers (10) kleiner ist als der Aussendurchmesser ($\emptyset da$) des Aussengewindes (26) der Schraube (20).

2.　Verfahren nach Anspruch 1,
　　**dadurch gekennzeichnet,**
　　**dass** der Aussendurchmesser $\emptyset da_s$) des Schneidgewindes (16) des Gewindebohrers (10) das 0.85-fache bis 0.92-fache des Aussendurchmessers ($\emptyset da$) des Aussengewindes (26) der Schraube (20) beträgt.

3.　Verfahren nach einem der vorstehenden Ansprüche,
　　**dadurch gekennzeichnet,**

**dass** die Gewindesteigung (Ps) des Schneidgewindes (16) des Gewindebohrers (10) um weniger als 3% von der Gewindesteigung (P) des Aussengewindes (26) der Schraube (20) abweicht.

4. Verfahren nach einem der vorstehenden Ansprüche,
   **dadurch gekennzeichnet,**
   **dass** der Kerndurchmesser ($\emptyset dk_S$) des Schneidgewindes (16) des Gewindebohrers (10) um weniger als 3% vom Kerndurchmesser ($\emptyset dk$) des Aussengewindes (26) der Schraube (20) abweicht.

5. Verfahren nach einem der vorstehenden Ansprüche,
   **dadurch gekennzeichnet,**
   **dass** die Gewindelänge ($L_S$) des Schneidgewindes (16) des Gewindebohrers (10) um weniger als 3% von der Gewindelänge (L) des Aussengewindes (26) der Schraube (20) abweicht.

6. Verfahren nach einem der vorstehenden Ansprüche,
   **dadurch gekennzeichnet,**
   **dass** beim Einschrauben der Schraube (20) zugleich ein Anbauteil (9) am Substrat (1) festgelegt wird.

7. Verfahren nach einem der vorstehenden Ansprüche,
   **dadurch gekennzeichnet,**
   **dass** der Antrieb (21) ein Schraubenkopf ist.

8. Gebinde (90) enthaltend
   eine Schraube (20) zum Einschrauben in ein Bohrloch (2) in einem Substrat (1) aus einem mineralischen Baustoff, wobei die Schraube (20) in einem vorderen Bereich ein Aussengewinde (26) und in einem rückwärtigen Bereich einen Antrieb (21) zum Einleiten eines Drehmoments in die Schraube (20) aufweist, und
   einen mit einem Schneidgewinde (16) versehenen Gewindebohrer (10),
   **dadurch gekennzeichnet,**
   **dass** der Aussendurchmesser $\emptyset da_S$) des Schneidgewindes (16) des Gewindebohrers (10) kleiner ist als der Aussendurchmesser ($\emptyset da$) des Aussengewindes (26) der Schraube (20).

## Claims

1. Method for setting a screw (20), which has an external thread (26) in a front area and a drive (21) in a rear area for introducing a torque into the screw (20), in a drill hole (2) in a substrate (1) made of a mineral material, in which

   - an internal thread (19) is produced in the drill hole (2) by means of a screw tap (10) provided with a cutting thread (16), and
   - then the screw (20) is introduced into the drill hole (2) and the external thread (26) of the screw (20) is screwed into the internal thread (19) in the drill hole (2) produced by the screw tap (10) in this,

   **characterised in that**
   the outside diameter $\emptyset da_S$) of the cutting thread (16) of the screw tap (10) is smaller than the outside diameter ($\emptyset da$) of the external thread (26) of the screw (20).

2. Method according to claim 1,
   **characterised in that**
   the outside diameter $\emptyset da_S$) of the cutting thread (16) of the screw tap (10) amounts to 0.85 times to 0.92 times the outside diameter ($\emptyset da$) of the external thread (26) of the screw (20).

3. Method according to one of the previous claims,
   **characterised in that**
   the thread pitch ($P_S$) of the cutting thread (16) of the screw tap (10) deviates by less than 3% from the thread pitch (P) of the external thread (26) of the screw (20).

4. Method according to one of the previous claims,
   **characterised in that**
   the core diameter ($\emptyset dk_S$) of the cutting thread (16) of the screw tap (10) deviates by less than 3% from the core diameter (Ødk) of the external thread (26) of the screw (20).

5. Method according to one of the previous claims,
   **characterised in that**
   the thread length ($L_s$) of the cutting thread (16) of the screw tap (10) deviates by less than 3% from the thread length (L) of the external thread (26) of the screw (20).

6. Method according to one of the previous claims,
   **characterised in that**
   when screwing in the screw (20) a mounting part (9) is set on the substrate (1) at the same time.

7. Method according to one of the previous claims,
   **characterised in that**
   the drive (21) is a screw head.

8. Package (90) containing
   a screw (20) for screwing into a drill hole (2) in a substrate (1) made of a mineral material, in which the screw (20) has an external thread (26) in a front area and a drive (21) in a rear area for introducing a torque into the screw (20), and a screw tap (10) provided with a cutting thread (16),
   **characterised in that**
   the outside diameter $Øda_s$) of the cutting thread (16) of the screw tap (10) is smaller than the outside diameter (Øda) of the external thread (26) of the screw (20).

**Revendications**

1. Procédé pour placer, dans un trou percé (2) dans un substrat (1) constitué d'un matériau de construction minéral, une vis (20) comportant, dans une zone avant, un filetage extérieur (26) et, dans une zone arrière, un entraînement (21) pour introduire un couple dans la vis (20), dans lequel

   - un filetage intérieur (19) est généré dans le trou percé (2) au moyen d'un taraud (10) pourvu d'un filetage taraudeur (16), et
   - la vis (20) est ensuite insérée dans le trou percé (2) et le filetage extérieur (26) de la vis (20) est ainsi vissé dans le filetage intérieur (19) généré par le taraud (10) dans le trou percé (2),

   **caractérisé en ce que**
   le diamètre extérieur ($\Phi da_s$) du filetage taraudeur (16) du taraud (10) est inférieur au diamètre extérieur ($\Phi da$) du filetage extérieur (26) de la vis (20).

2. Procédé selon la revendication 1,
   **caractérisé en ce que**
   le diamètre extérieur ($\Phi da_s$) du filetage taraudeur (16) du taraud (10) est égal à 0,85 à 0,92 fois le diamètre extérieur ($\Phi da$) du filetage extérieur (26) de la vis (20).

3. Procédé selon l'une des revendications précédentes,
   **caractérisé en ce que**
   le pas de filetage (Ps) du filetage taraudeur (16) du taraud (10) dévie de moins de 3 % du pas de filetage (P) du filetage extérieur (26) de la vis (20).

4. Procédé selon l'une des revendications précédentes,
   **caractérisé en ce que**
   le diamètre à fond de filet ($\Phi dk_s$) du filetage taraudeur (16) du taraud (10) dévie de moins de 3 % du diamètre de fond de filet ($\Phi dk$) du filetage extérieur (26) de la vis (20).

5. Procédé selon l'une des revendications précédentes,

   **caractérisé en ce que**
   la longueur de filetage ($L_s$) du filetage taraudeur (16) du taraud (10) dévie de moins de 3 % de la longueur de filetage (L) du filetage extérieur (26) de la vis (20).

6. Procédé selon l'une des revendications précédentes,

   **caractérisé en ce que**
   lors du vissage de la vis (20), une pièce d'ajout (9) est fixée en même temps sur le substrat (1).

7. Procédé selon l'une des revendications précédentes, **caractérisé en ce que** l'entraînement (21) est une tête de vis.

8. Emballage (90) contenant

   une vis (20) à visser dans un trou percé (2) dans un substrat (1) constitué d'un matériau de construction minéral, dans lequel la vis (20) comporte un filetage extérieur (26) dans une zone avant et, dans une zone arrière, un entraînement (21) pour introduire un couple dans la vis (20), et
   un taraud (10) pourvu d'un filet taraudeur (16),
   **caractérisé en ce que**
   le diamètre extérieur ($\Phi da_s$) du filet taraudeur (16) du taraud (10) est inférieur au diamètre extérieur ($\Phi da$) du filetage extérieur (26) de la vis (20).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19735280 A1
- DE 19905845 A1
- EP 0625400 A1
- US 4439077 A
- US 4842467 A
- US 8696477 A
- US 8182185 A
- US 7740435 A
- US 8182186 A
- US 7484920 A